# FASCICULE DE BREVET EUROPEEN

(11) **EP 2 442 992 B1**
(45) Date de publication et mention de la délivrance du brevet: **27.04.2016**
(21) Numéro de dépôt: 10734247.9
(22) Date de dépôt: 16.06.2010
(51) Int. Cl.: B60H 1/00, B60K 37/00, B60R 21/34, B62D 25/14

(54) **PLANCHE DE BORD DE VÉHICULE AUTOMOBILE AGENCÉE POUR SE DÉFORMER EN CAS DE CHOC**
ARMATURENBRETT FÜR EIN AUTO MIT DEFORMATIONSFUNKTION IM FALLE EINES AUFPRALLS
DASHBOARD FOR AUTOMOBILE CAPABLE OF DEFORMATION IN THE EVENT OF IMPACT

(30) Priorité: 19.06.2009 FR 0954174
(43) Date de publication de la demande: 25.04.2012
(73) Titulaire: Faurecia Intérieur Industrie, 92000 Nanterre (FR)
(72) Inventeur: PONTHIEU, Didier, F-60480 La Neuville Saint Pierre (FR); BERGERIOUX, Jacques, F-95810 Arronville (FR)
(74) Mandataire: Domenego, Bertrand
(86) Numéro de dépôt international: PCT/FR2010/051198
(87) Numéro de publication internationale: WO 2010/146306

(56) Documents cités:
- FR-A- 2 747 358

## Description

La présente invention concerne une planche de bord pour véhicule automobile du type comprenant un panneau destiné à être placé sous un pare-brise, ledit panneau comprenant au moins une ouverture, la planche de bord comprenant en outre un dispositif d'aération comprenant un orifice de sortie, ledit orifice de sortie étant relié à ladite ouverture par un conduit de guidage de l'air s'étendant de l'orifice de sortie à l'ouverture.

Le document FR-2 747 358 décrit une telle planche de bord.

L'invention concerne également un véhicule automobile comprenant une telle planche de bord.

En cas de choc entre un piéton et la partie avant d'un véhicule automobile, il se peut que la tête du piéton vienne heurter le pare-brise, ce qui peut lui causer de graves lésions. Afin de réduire ce risque, il est connu de prévoir un pare-brise agencé pour s'étoiler et pour s'enfoncer vers la planche de bord en cas de choc afin d'absorber une partie de l'énergie due au choc. Il est également connu de prévoir une planche de bord se déformant sous l'effet de l'enfoncement du pare-brise, par exemple en réalisant les conduits d'air de la planche de bord avec un matériau apte à absorber de l'énergie.

Cependant, l'absorption d'énergie par les moyens décrits ci-dessus n'est pas suffisante pour protéger le piéton de façon optimale en cas de choc contre la partie avant du véhicule automobile. Par conséquent, il existe toujours un risque important de causer des lésions à la tête d'un piéton en cas de choc.

L'un des buts de l'invention est de pallier cet inconvénient en proposant une planche de bord permettant d'améliorer l'absorption de l'énergie due à un choc contre le pare-brise d'un véhicule automobile.

A cet effet, l'invention concerne une planche de bord du type précité, selon la partie caractérisante de la revendication 1.

La déformation du conduit de guidage de l'air par déformation du conduit permet d'accompagner la déformation du panneau en absorbant de l'énergie due au choc provoquant l'enfoncement de la planche de bord.

Selon d'autres caractéristiques de la planche de bord :
- l'ouverture du panneau comprend un élément de bordure, le conduit s'étendant dans le prolongement dudit élément sous le panneau ;
- le conduit comprend une valve disposée au voisinage de l'ouverture du panneau, ladite valve permettant de commander le passage de l'air par l'ouverture ;
- le conduit comprend des moyens de positionnement du conduit par rapport à la caisse du véhicule automobile ;
- le panneau comprend une partie avant formée par un élément de garnissage rigide, ledit élément formant une partie de la partie avant du conduit ; et
- ledit élément de garnissage est agencé pour se détacher du reste du panneau et pour s'enfoncer en cas de choc contre le panneau

L'invention concerne également un véhicule automobile comprenant une planche de bord telle que décrite ci-dessus.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'une planche de bord selon un premier mode de réalisation de l'invention,
- la Fig. 2 est une représentation schématique de la planche de bord de la Fig. 1 déformée suite à un choc contre la planche de bord,
- la Fig. 3 est une représentation schématique en coupe d'une planche de bord selon un mode de réalisation différent de l'invention,
- la Fig. 4 est une représentation schématique en coupe de la planche de bord de la Fig. 3 déformée suite à un choc contre la planche de bord,
- la Fig. 5 est une représentation schématique en coupe d'une planche de bord selon un autre mode de réalisation différent de l'invention,
- la Fig. 6 est une représentation schématique en coupe de la planche de bord de la Fig. 5 suite à un choc contre la planche de bord.

Dans la description, les termes « avant », « arrière », « dessus », « dessous », etc. sont définis par rapport aux directions usuelles d'un véhicule automobile monté.

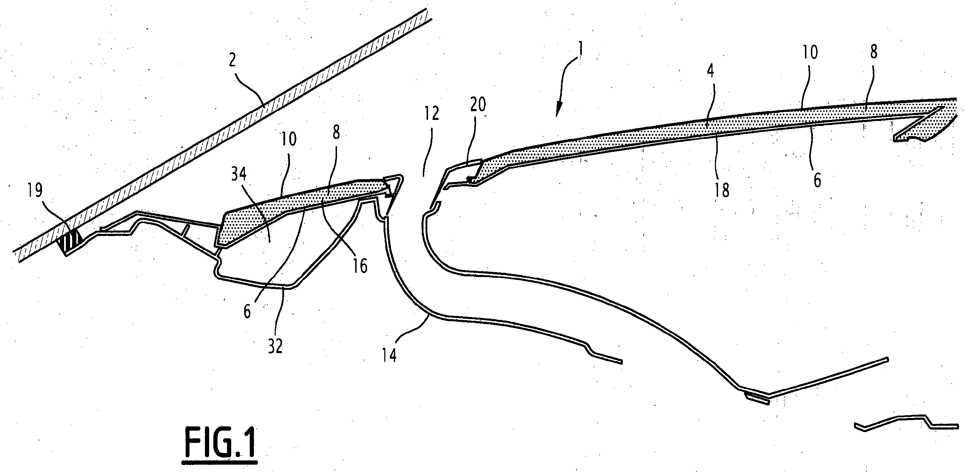

En référence à la Fig. 1, on décrit une planche de bord 1 disposée sous et en regard d'un pare-brise 2 d'un véhicule automobile.

La planche de bord 1 comprend un panneau 4 s'étendant sensiblement horizontalement de l'avant vers l'arrière du véhicule. De façon classique, ce panneau 4 est par exemple formé d'un insert rigide 6 sur lequel une couche de mousse 8 est disposée, une peau de garnissage 10 recouvrant la couche de mousse 8.

Le panneau 4 comprend au moins une ouverture 12 débouchant en regard du pare-brise 2. Cette ouverture 12 présente par exemple la forme d'une fente s'étendant selon une partie de la largeur du panneau 4 et permet par exemple le désembuage du pare-brise 2. A cet effet, l'ouverture 12 est reliée à un orifice de sortie d'air d'un dispositif d'aération (non représenté), tel qu'un appareil de climatisation, par un conduit 14 de guidage de l'air.

Le panneau 4 comprend une partie avant 16 s'étendant en avant de l'ouverture 12 et une partie arrière 18 s'étendant en arrière de l'ouverture 12. La partie avant 16 est disposée au voisinage et directement sous le pare-brise 2. La partie extrême avant de la partie avant 16 comprend par exemple des moyens de maintien 19 de la partie avant 16 par rapport au pare-brise 2. Ces moyens de maintien 19 sont par exemple formés par des agrafes ou des plots soutenant la partie avant 16 selon la direction verticale ou autre. Les moyens de maintien 19 comprennent des zones de fragilisation agencées pour rompre les moyens de maintien 19 en cas de choc et permettre un déplacement, notamment vertical, de la partie avant 16 du panneau 4. Ainsi, en cas de choc, si une poussée est exercée sur le dessus de la partie avant 16, celle-ci s'enfonce vers le bas.

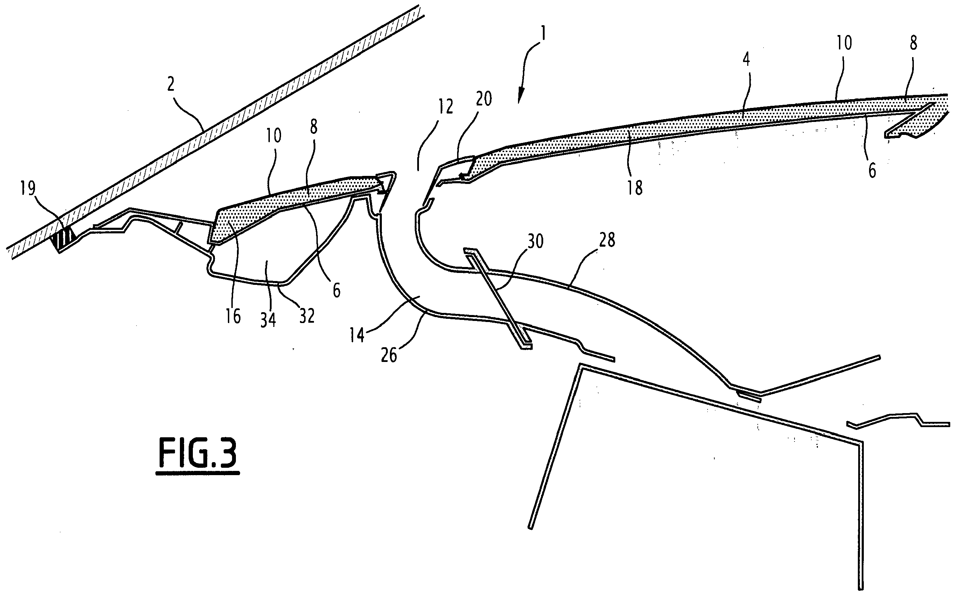

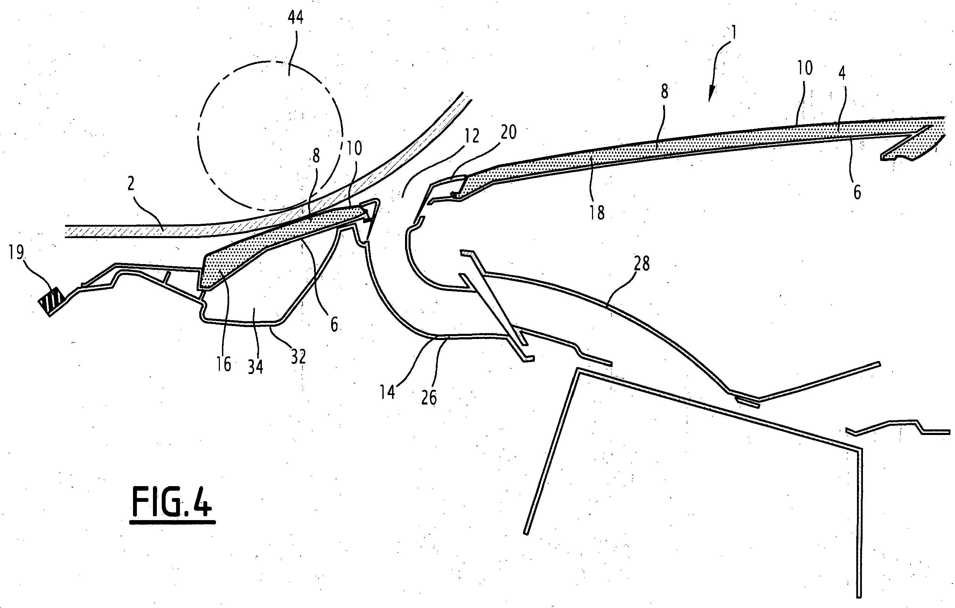

Selon les modes de réalisation représentés sur les Fig. 1 à 4, un élément de bordure 20, ou « frise de désembuage », est disposé dans l'ouverture 12 et fixé aux bords de la partie avant 16 et de la partie arrière 18 du panneau 4. Cet élément de bordure 20 est par exemple réalisé sous la forme d'un insert en matière plastique et forme les parois de l'ouverture 12. Le conduit 14 s'étend dans le prolongement de l'élément 20 sous le panneau 4. Selon un mode de réalisation, des moyens de fixation du conduit 14 à l'élément 20, tels que des moyens d'encliquetage, sont prévus.

Une valve (non représentée) est par exemple disposée dans l'élément 20 et disposée au voisinage de l'ouverture 12 du panneau 4, ladite valve permettant de commander le passage de l'air par l'ouverture 12 lorsque le désembuage du pare-brise est nécessaire.

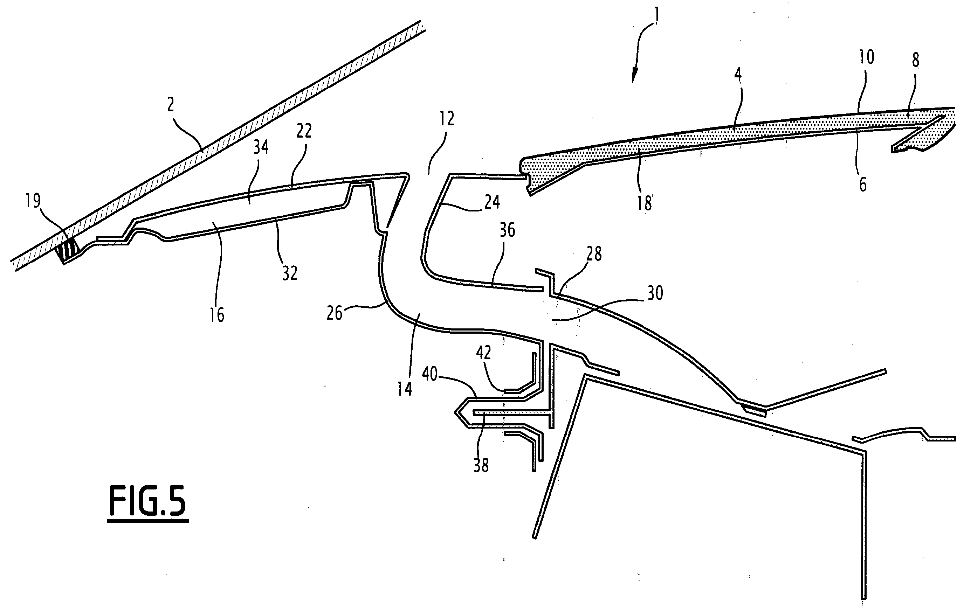

Selon le mode de réalisation représenté sur la Fig. 5, la partie avant 16 du panneau 4 est formée par un élément de garnissage rigide 22, tel qu'un plastron en matière plastique, dont une partie 24 forme les parois de l'ouverture 12. Dans ce mode de réalisation, l'ouverture 12 est pratiquée dans l'élément de garnissage 22 et le bord de la partie arrière 18 du panneau 4 est fixée à un bord de l'élément de garnissage.

Selon le mode de réalisation représenté sur la Fig. 1, le conduit 14 est réalisé en un matériau souple, tel qu'un matériau soufflé, agencé pour absorber de l'énergie en cas de déformation du conduit 14. Selon ce mode de réalisation, le conduit 14 est réalisé en une seule pièce. Le fait de prévoir un conduit souple permet de simplifier le montage de la planche de bord 1 dans le véhicule automobile en autorisant des déformations du conduit 14 lors de ce montage.

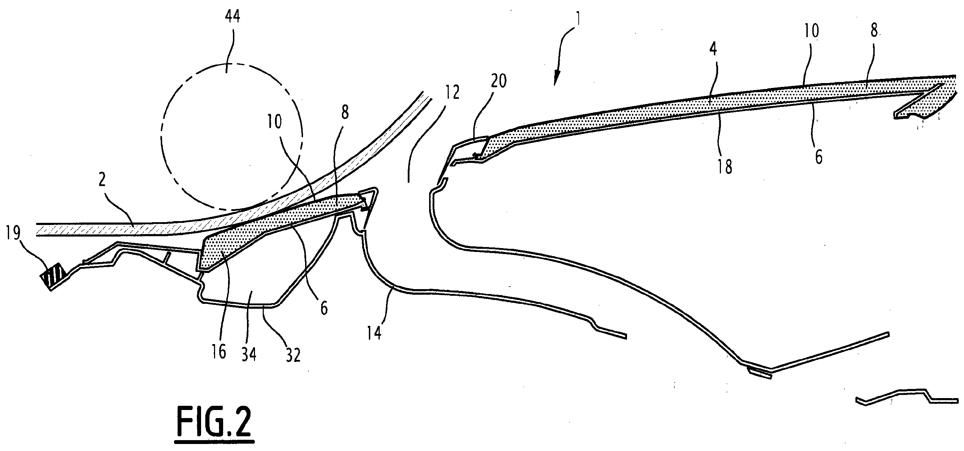

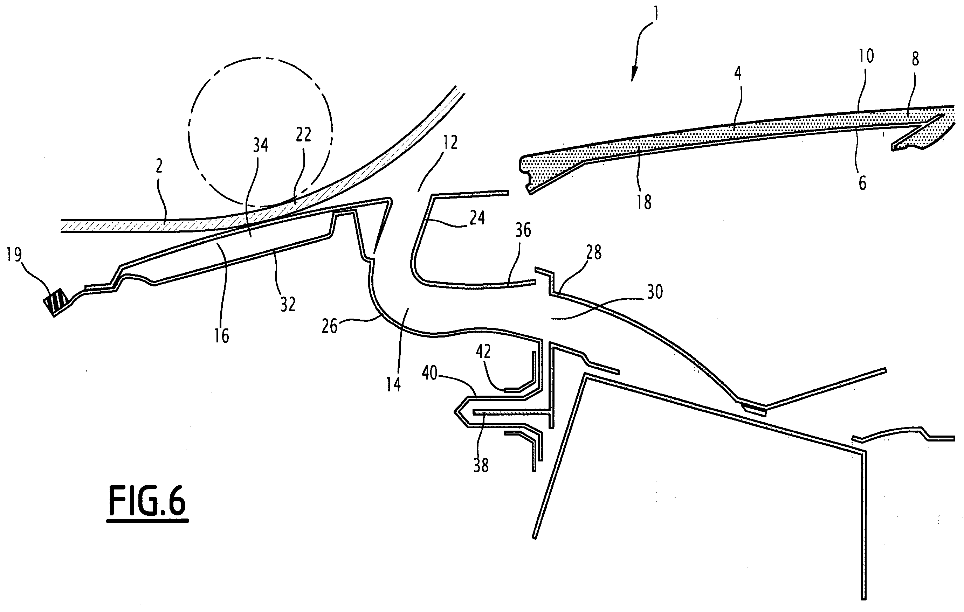

On décrit à présent le comportement de la planche de bord 1 décrite ci-dessus en cas de choc contre le pare-brise 2 du véhicule automobile. Sur les Fig. 2, 4 et 6, on a représenté un objet 44, par exemple la tête d'un piéton, entrant en contact avec le pare-brise 2.

Le choc entre l'objet 44 et le pare-brise 2 entraîne un enfoncement du pare-brise 2 vers la partie avant 16 du panneau 4. Le pare-brise 2 se déforme en s'étoilant et en absorbant déjà une partie de l'énergie due au choc. Sous l'effet de son enfoncement, le pare-brise 2 vient au contact de la partie avant 16 du panneau 4 et entraîne l'enfoncement de celle-ci selon une direction sensiblement verticale. L'enfoncement de la partie avant 16 se fait après rupture des moyens de maintien 19 et une partie de l'énergie due au choc est encore absorbée par l'enfoncement de la partie avant 16 et la déformation du conduit d'air 34.

Selon le mode de réalisation dans lequel le conduit 14 est souple et comme représenté sur la Fig. 2, l'enfoncement de la partie avant 16 entraîne la déformation du conduit 14 souple qui s'écrase en absorbant de l'énergie et permet un enfoncement plus profond de la partie avant 16, ce qui augmente encore l'absorption d'énergie.

Le matériau employé pour former le conduit 14 peut également être choisi pour favoriser encore l'absorption d'énergie. Ainsi, la déformation du conduit 14 en elle-même favorise également l'absorption d'énergie due au choc contre le pare-brise 2.

La planche de bord 1 décrite ci-dessus permet d'améliorer la protection des piétons en améliorant l'absorption d'énergie en cas de choc contre le pare-brise 2 du véhicule. Cette amélioration est obtenue en faisant participer la planche de bord 1 à l'absorption d'énergie grâce au conduit de guidage d'air 14. Une telle planche de bord 1 est simple à mettre en oeuvre et à monter dans un véhicule automobile étant donné qu'elle est similaire à une planche de bord classique.

## Revendications

1. Planche de bord (1) pour véhicule automobile comprenant un panneau (4) destiné à être placé sous un pare-brise (2), ledit panneau (4) comprenant au moins une ouverture (12), le panneau comprenant une partie avant (16, 26) s'étendant en avant de l'ouverture (12) et une partie arrière (18, 28) s'étendant en arrière de l'ouverture (12), la planche de bord comprenant en outre un dispositif d'aération comprenant un orifice de sortie, ledit orifice de sortie étant relié à ladite ouverture (12) par un conduit de guidage de l'air (14) s'étendant de l'orifice de sortie à l'ouverture (12), **caractérisée en ce que** la partie avant (16, 26) s'enfonce en cas de choc contre le panneau entraînant la déformation dudit conduit (14) en absorbant de l'énergie, le conduit (14) étant réalisé en une seule pièce en matériau souple et étant agencé pour se déformer de sorte à permettre l'enfoncement de la partie avant (16, 26) du panneau (4) en absorbant de l'énergie en cas de choc contre ledit panneau (4).

2. Planche de bord selon la revendications 1, **caractérisée en ce que** l'ouverture (12) du panneau (4) comprend un élément de bordure (20), le conduit (14) s'étendant dans le prolongement dudit élément (20) sous le panneau (4).

3. Planche de bord selon la revendication 1 2, **caractérisée en ce que** le conduit (14) comprend une valve disposée au voisinage de l'ouverture (12) du panneau (4), ladite valve permettant de commander le passage de l'air par l'ouverture (12).

4. Planche de bord selon l'une quelconque des revendications 1 à 3, **caractérisée en ce que** le conduit (14) comprend des moyens de positionnement (38, 40, 42) du conduit (14) par rapport à la caisse du véhicule automobile.

5. Planche de bord selon l'une quelconque des revendications 1 à 4, **caractérisée en ce que** le panneau (4) comprend une partie avant formée par un élément de garnissage rigide (22), ledit élément (22) formant une partie de la partie avant (26) du conduit (14).

6. Planche de bord selon la revendication 5, **caractérisée en ce que** ledit élément de garnissage (22) est agencé pour se détacher du reste du panneau (4) et pour s'enfoncer en cas de choc contre le panneau (4).

7. Véhicule automobile comprenant un pare-brise (2) et une planche de bord (1) disposée en regard du pare-brise (2), **caractérisée en ce que** la planche de bord (1) est selon l'une quelconque des revendications 1 à 6 est est agencée pour se déformer en cas de choc contre le pare-brise (2) en regard de ladite planche de bord (1).

## Patentansprüche

1. Armaturenbrett (1) für ein Kraftfahrzeug, eine Platte (4) aufweisend, die dazu bestimmt ist, unter einer Windschutzscheibe (2) angeordnet zu sein, wobei die Platte (4) mindestens eine Öffnung (12) aufweist, wobei die Platte ein vorderes Teil (16, 26), das sich vor der Öffnung (12) erstreckt, und ein hinteres Teil (18, 28) aufweist, das sich hinter der Öffnung (12) erstreckt, wobei das Armaturenbrett darüber hinaus eine Belüftungsvorrichtung aufweist, die eine Austrittsöffnung aufweist, wobei die Austrittsöffnung über einen sich von der Austrittsöffnung zur Öffnung (12) erstreckenden Luftführungskanal (14) mit der Öffnung (12) verbunden ist, **dadurch gekennzeichnet, dass** sich im Falle eines Aufpralls das vordere Teil (16, 26) gegen die Platte drückt, was die Verformung des Kanals (14) unter Aufnahme der Energie nach sich zieht, wobei der Kanal (14) in einem einzigen Stück aus einem nachgiebigen Material hergestellt und dazu eingerichtet ist, sich zu verformen, um das Andrücken des vorderen Teils (16, 26) der Platte (4) unter Aufnahme der Energie im Falle eines Aufpralls gegen die Platte (4) zuzulassen.

2. Armaturenbrett nach Anspruch 1, **dadurch gekennzeichnet, dass** die Öffnung (12) der Platte (4) ein Einfassungselement (20) aufweist, wobei sich der Kanal (14) in der Verlängerung des Elements (20) unter der Platte (4) erstreckt.

3. Armaturenbrett nach Anspruch 1 oder 2, **dadurch gekennzeichnet, dass** der Kanal (14) ein Ventil aufweist, das in der Nähe der Öffnung (12) der Platte (4) angeordnet ist, wobei es das Ventil ermöglicht, den Durchtritt der Luft durch die Öffnung (12) zu steuern.

4. Armaturenbrett nach einem der Ansprüche 1 bis 3, **dadurch gekennzeichnet, dass** der Kanal (14) Einrichtungen (38, 40, 42) zur Positionseinstellung des Kanals (14) in Bezug auf die Karosserie des Kraftfahrzeugs aufweist.

5. Armaturenbrett nach einem der Ansprüche 1 bis 4, **dadurch gekennzeichnet, dass** die Platte (4) ein vorderes Teil aufweist, das durch ein starres Auskleidungselement (22) gebildet ist, wobei das Element (22) einen Teil des vorderen Teils (26) des Kanals (14) bildet.

6. Armaturenbrett nach Anspruch 5, **dadurch gekennzeichnet, dass** das Auskleidungselement (22) dazu eingerichtet ist, sich vom Rest der Platte (4) abzulösen und sich im Falle eines Aufpralls gegen die Platte (4) zu drücken.

7. Kraftfahrzeug mit einer Windschutzscheibe (2) und einem Armaturenbrett (1), das der Windschutzscheibe (2) zugewandt angeordnet ist, **dadurch gekennzeichnet, dass** das Armaturenbrett (1) eines der der Ansprüche 1 bis 6 ist und dazu eingerichtet ist, sich im Falle eines Aufpralls gegen die dem Armaturenbrett (1) zugewandte Windschutzscheibe (2) zu verformen.

## Claims

1. A motor vehicle dashboard (1) comprising a panel (4) designed to be placed below a windshield (2), said panel (4) comprising at least one opening (12), the panel comprising a front portion (16, 26) extending in front of the opening (12) and a rear portion (18, 28) extending behind the opening (12), the dashboard further comprising an aeration device comprising an outlet orifice, said outlet orifice being connected to said opening (12) by an air guide duct (14) extending from the outlet orifice to the opening (12), **characterized in that** the front portion (16, 26) is pushed in if an impact occurs against the panel causing the deformation of said duct (14) while absorbing energy, the duct (14) being made in a single piece of flexible material and being arranged to deform so as to allow the front portion (16, 26) of the panel (4) to be pushed in while absorbing energy in case of impact against said panel (4).

2. The dashboard according to claim 1, **characterized in that** the opening (12) of the panel (4) comprises a border element (20), the duct (14) extending in the extension of said element (20) below the panel (4).

3. The dashboard according to claim 1 or 2, **characterized in that** the duct (14) comprises a valve positioned near the opening (12) of the panel (4), said valve making it possible to control the passage of air through the opening (12).

4. The dashboard according to any one of claims 1 to 3, **characterized in that** the duct (14) comprises positioning means (38, 40, 42) for positioning the duct (14) relative to the body of the motor vehicle.

5. The dashboard according to any one of claims 1 to 4, **characterized in that** the panel (4) comprises a front portion formed by a rigid trim element (22), said element (22) forming part of the front portion (26) of the duct (14).

6. The dashboard according to claim 5, **characterized in that** said trim element (22) is arranged to detach from the rest of the panel (4) and to be pushed in if there is an impact against the panel (4).

7. A motor vehicle comprising a windshield (2) and a dashboard (1) positioned across from the windshield (2), **characterized in that** the dashboard (1) is according to any one of claims 1 to 6 and is arranged to deform if there is an impact against the windshield (2) across from said dashboard (1).
